**Europäisches Patentamt**

**European Patent Office**

**Office européen des brevets**

(19)

(11) Publication number : **0 635 800 A1**

## (12) EUROPEAN PATENT APPLICATION

(21) Application number : **94202098.3**

(22) Date of filing : **19.07.94**

(51) Int. Cl.⁶ : **G06K 19/00,** G07C 5/00, G08G 1/127, G06F 17/60, G06K 17/00

(30) Priority : **23.07.93 NL 9301301**

(43) Date of publication of application :
**25.01.95 Bulletin 95/04**

(84) Designated Contracting States :
**BE DE FR GB NL**

(71) Applicant : **Koninklijke PTT Nederland N.V.**
**P.O. Box 95321**
**NL-2509 CH The Hague (NL)**

(72) Inventor : **De Haas, Jacobus Johannes**
**Karpaten 53**
**NL-2264 ME Leidschendam (NL)**
Inventor : **Kerling, Frank Martin**
**Prinses Annalaan 466**
**NL-2263 XW Leidschendam (NL)**

(54) System and device for the transfer of vehicle data.

(57)    System for the transfer of data relating to vehicles (4, 4'), comprising vehicle units (1, 1') disposed in vehicles (4, 4'), a central unit (3), and at least one intermediate unit (2), which intermediate unit is equipped for at least the temporary storage of data, the system being equipped for the transfer of data between the vehicle units (1, 1') and the intermediate unit (2), on the one hand, and between the central unit (3) and the intermediate unit (2), on the other hand, the system further being equipped for the remote transfer of data by means of infrared light between the vehicle units (1, 1') and the intermediate unit (2). The vehicle unit (1) of a vehicle (4) is advantageously situated inside the vehicle (4) behind a window of said vehicle, which window is preferably the windscreen (5). The intermediate unit is preferably equipped for the storage of data from several vehicles (4, 4').

Fig. 1

EP 0 635 800 A1

## BACKGROUND OF THE INVENTION

The invention relates to a system for the transfer of data relating to vehicles, comprising vehicle units disposed in vehicles, a central unit, and at least one intermediate unit, which intermediate unit is equipped for at least the temporary storage of data, the system being equipped for the transfer of data between the vehicle units and the intermediate unit, on the one hand, and between the central unit and the intermediate unit, on the other hand, and the system further being equipped for the transfer of data by means of infrared light between the vehicle units and the intermediate unit. The invention also relates to an intermediate unit for use in such a system.

A system of the type mentioned in the preamble, and also an intermediate unit for use therein, is known from German Patent Application DE-A-4,118,486 [1].

In the known system the vehicle unit accommodated in a vehicle is a board computer which stores data relating to the respective vehicle. These data are transferred by means of an intermediate unit to a central unit such as a personal computer, where the data can be processed. For this purpose, the known intermediate unit is shaped like a diskette. For the exchange of data with this diskette-shaped intermediate unit, both the central unit and the vehicle unit are provided with a reading unit, into which said diskette-shaped intermediate unit can be inserted. When inserted, the intermediate unit can communicate with the respective reading unit, for example by means of infrared light.

Such a diskette-shaped intermediate unit, which for the transfer of data must be inserted into the reader of the central unit or vehicle unit, has the disadvantage that data can be exchanged with a vehicle unit only if the intermediate unit is in the vehicle. The vehicle data can thus be checked only by someone who has access to the vehicle concerned, or who can open the vehicle. The known system also has the disadvantage that the transfer of vehicle data by always inserting and removing the intermediate unit is relatively time-consuming. If data have to be read out from a fairly large number of vehicles or have to be put into a fairly large number of vehicles, the transfer time required is considerable.

French Patent Application FR-A-2.667.554 [2] discloses an anti-theft system for vehicles. Vehicle identification data are transmitted from a vehicle unit to an apparatus in which the vehicle data are compared with stored data of missing vehicles. The apparatus receiving the data may be portable but is not equipped for gathering data received from vehicles and transferring those data to other devices. Furthermore, the data concerned are fixed and only relate to the identification of the vehicle, not to its position, itinerary, mechanical condition, etc. The system disclosed in [2] is therefore not suitable for transferring vehicle usage data from a plurality of vehicles to a central unit, and is certainly not suitable for transferring data from a central unit to vehicles.

British Patent Application GB-A-2.192.665 [3] discloses a control apparatus consisting of an operating device and a keying device. The operating device may be installed in a vehicle and may be arranged to transmit data to an external device when actuated by the keying device. It is therefore necessary to bring the operating device, and therefore also the vehicle it is installed in, within the vicinity of the external device, as the keying device is not arranged for receiving and storing data and for transferring gathered data to the external device.

French Patent Application FR-A-2.647.930 [4] discloses a module for communication between a vehicle and an infrastructure. The module, which is installed in a vehicle, contains essentially fixed data relating to e.g. the type of vehicle, the insurance of the vehicle, etc. Reference [4] does not disclose a system for gathering vehicle usage data by means of a portable intermediate unit.

## SUMMARY OF THE INVENTION

An object of the invention is to eliminate the abovementioned disadvantages of the prior art and to provide a system for the transfer of vehicle data by means of which data can be transferred quickly and efficiently. A further object of the invention is to provide a system for gathering data from and transferring data to a plurality of vehicles without having to bring the vehicles within the vicinity of a fixed device. A still further object of the invention is to provide a system for transferring vehicle data, the system providing a great measure of data security and in particular virtually eliminating the possibility of tampering with said vehicle data.

These and other objects may be met by the system according to the present invention, which system is characterized in that it is equipped for the remote bidirectional transfer of data between the vehicle units and the at least one intermediate unit, the intermediate unit being equipped for the storage of data from several vehicles. In other words, data can be transferred between the vehicle units and the intermediate unit without there being any physical contact between the respective vehicle unit and the intermediate unit. This also means that it is not necessary to enter the vehicle concerned, which saves time and trouble, while no time is lost inserting and removing the intermediate unit either. With the system according to the invention, it is possible to speed up the transfer of data from and to a vehicle. This will be a particular advantage if data have to be transferred from and to a large number of vehicles.

For the successive transfer of data from and to a fairly large number of vehicles, it is expedient for the intermediate unit to be equipped for the storage of data from several vehicles. This makes it possible to collect the data from a number of vehicles in the intermediate unit, and then to transfer these collected data in one go to, for example, the central unit. The constant transfer of data per vehicle, for example from one vehicle to the intermediate unit and from there immediately to the central unit before one can continue with the next vehicle, is avoided by this measure. It will be clear that a considerable time-saving can be achieved in this way, in particular if the system according to the invention is being used in a fairly extensive fleet of vehicles.

The bidirectional transfer of data between the vehicle units and the intermediate unit makes it possible not only to retrieve data collected in the vehicles, for example relating to travelling times and engine conditions, but also to transfer to the vehicles data relating to, for example, journeys to be covered or measures to be taken by the vehicle. However, a system may be provided in which there is data transfer in only one direction, for example from the central unit via the intermediate unit to the vehicle units, in order to provide the vehicle units with instructions.

Although it is possible to transfer data from the intermediate unit to the central unit by means of e.g. a cable connection, the system according to the invention is preferably equipped for the remote bidirectional transfer of data between the central unit and the at least one intermediate unit. This eliminates the need of making a cable connection or even coming within the proximity of the central unit.

The system according to the invention is advantageously designed in such a way that a vehicle unit is situated inside a vehicle behind a window of said vehicle, which window is preferably the windscreen. This makes it possible to exchange data in a simple manner by means of infrared light between the intermediate unit and the respective vehicle unit, while the vehicle unit is accommodated in the shelter of the vehicle. The above-mentioned preferred positioning behind the windscreen makes it possible to use the space present in most (motor) vehicles on the dashboard for the installation of the vehicle unit, or at least the communication part thereof.

It will be understood that the use of the system according to the invention and of the component parts thereof is not restricted to the exchange of data between vehicles, on the one hand, and a fixed or mobile central unit, on the other hand, but that the intermediate unit can also be used for, for example, transferring data from one central unit to another, in which case the said other central unit can be either a second, possibly additional, central unit of the same system or a central unit of another system. Such an additional central unit can be used as, for example, a back-up unit or as a control unit. In a similar way, it is possible with a number of systems to exchange data by means of one or more intermediate units, by means of their respective central units, in which case a central unit of a higher order can serve as the central post for these systems.

In a preferred embodiment of the system according to the invention, the vehicle units are arranged to prevent the manual input of data. That is, the vehicle units are preferably designed in such a way that they can be operated only by means of an intermediate unit. In other words, the vehicle unit has no externally accessible operating elements, such as a key pad, allowing the entry of data or the alteration of data already entered, although the vehicle unit is advantageously connected with sensors for collecting vehicle data. The advantage of this preventing of manual input is that the driver of the vehicle cannot exert any influence on the respective vehicle unit, so that an independent and reliable check on vehicle data such as travelling times and distances is made possible.

The security and reliability of the vehicle data is further enhanced if the transfer of data between a vehicle unit and an intermediate unit is possible only if said transfer includes a password which is unique for the particular vehicle unit. That is, each vehicle unit is assigned a password which enables the communication between the vehicle unit and the intermediate unit. The password of a vehicle unit may be replaced by a new password. An operator in possession of the existing (old) password may replace the old password with a new password. An operator not in possession of the old password may advantageously be permitted to change the password, allowing for instance the system to be used by a different operator, or allowing vehicle units to be interchanged between systems. In order to provide security of the vehicle data stored in the vehicle units under the old password the vehicle units are thus preferably arranged for replacing the password by a new password, the vehicle data stored in the vehicle unit being erased if the new password is transferred without the existing password. In other words, in such an embodiment the replacement of the password by another operator is possible, but the vehicle data stored during the use of the old password are destroyed in this case. The data erased will normally also include the old password.

The use of passwords and the safeguarding of data is not limited to the transfer of data between the vehicle units and the intermediate units but may also be applied to the transfer of data between the intermediate unit and the central unit.

The data transfer between the units of the system is effected by means of a communications protocol. In principle, such a protocol can be achieved in many different ways. For example, the requirements set for the transfer on the route between intermediate unit and vehicle unit may be different from those set for the transfer on the route between intermediate unit and central unit, and for the transfer by means of infrared light a protocol may be used which differs from that used for transfer by means of a cable connection. Moreover, the protocol may depend on the data to be transferred along a particular path. The system according to the invention is advantageously designed in such a way that the data transfer is effected on the basis of a protocol which is transparent for the data to be transferred and for the communication medium. The protocol is preferably also essentially transparent for the transfer path, so that variants of the same basic protocol can be used on the various transfer paths. In other words, a single basic protocol can be used on all paths, irrespective of the type of data and irrespective of the method of communication. This makes it possible to adapt the system according to the invention in a very simple manner to new developments and requirements, while only a single basic protocol need be designed for the various paths and methods of transfer.

In a system according to the invention it is in principle possible for the data transfer to be interrupted, for example through objects or persons passing between the communicating units, or through the fact that, in particular in the case of a portable intermediate unit, it is not constantly directed at the vehicle unit in question. After the interruption of the communication, it must be restored, following which the data transfer can be resumed. Efficient data transfer is achieved in the system according to the invention if the system is equipped for data transfer in data blocks and for recording the number of data blocks transmitted, in order to ensure that, after an interruption in the data transfer, re-transmission of data blocks already transmitted does not occur. The result of this is that, following the resumption of communication, the further communication time required, and thus the chance of further errors and interruptions, is considerably reduced. This further enhances the reliability and security of the system.

In the system according to the invention, the vehicle units are advantageously equipped for the storage of data relating, inter alia, to the current geographic position of the respective vehicle. With the aid of such data, it is possible, inter alia, to trace a vehicle or to determine and/or check the route covered by a vehicle. In an advantageous embodiment, in the system according to the invention the central unit is linked to a data processing unit which is capable of graphically presenting the journeys covered by the vehicles. This makes it simple to, for example, display the journey covered by a vehicle and to trace the vehicle visually.

The present invention is not restricted to a system in which at least the data transfer between the vehicle units and the intermediate unit is effected by means of infrared light, but can also relate to, for example, a system in which the data transfer by means of infrared light is replaced by data transfer by means of electromagnetic radiation.

**REFERENCES**

[1] DE-A-4.118.486
[2] FR-A-2.667.554
[3] GB-A-2.192.665
[4] FR-A-2.647.930

**EXEMPLARY EMBODIMENTS**

The invention will be explained in greater detail below with reference to exemplary embodiments shown schematically in the figures.

Fig. 1 shows schematically the system according to the invention.

Fig. 2 shows schematically the structure of an intermediate unit for use in the system according to the invention.

Fig. 3 shows schematically the structure of a vehicle unit for use in the system according to the invention.

Fig. 4 shows a circuit which can advantageously be used in the system according to the invention.

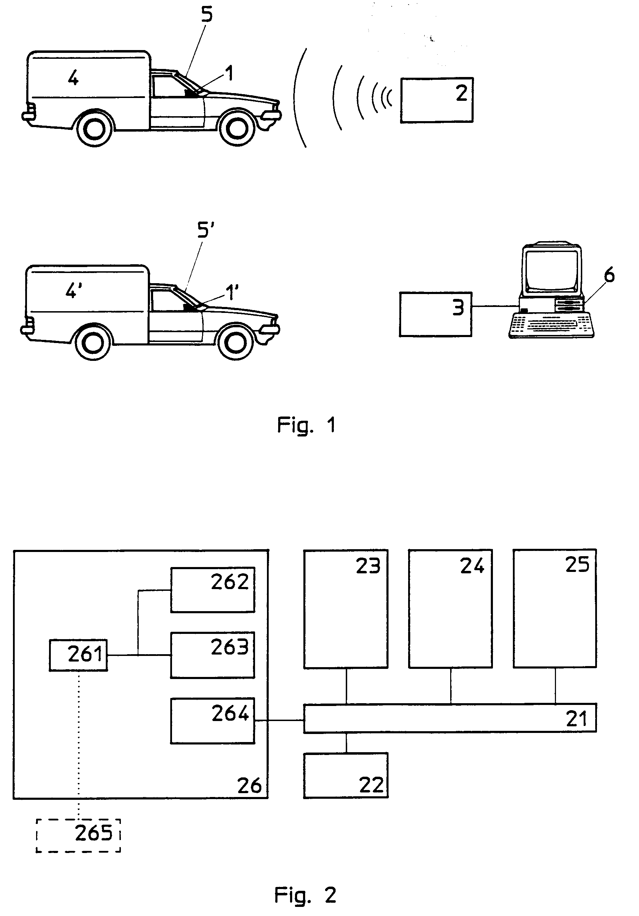

The system shown schematically in Fig. 1 comprises a vehicle unit 1, an intermediate unit 2, and a central unit (central data processing unit) 3. The vehicle unit 1 is disposed in a vehicle 4 behind the windscreen 5, preferably on the dashboard (not shown) of the vehicle 4. In a second vehicle 4' a second vehicle unit 1' is disposed behind a second windscreen 5'.

In the preferred embodiment of the invention, the vehicle units 1, 1' are equipped for the storage of data relating to the opening and closing of the doors and (if present) of the tailboard or loading door, the running of the engine, the mileage, the speed, and the level in the fuel tank of the respective vehicle. The vehicle units are preferably also equipped for the storage of data relating to the current geographic position of the vehicle.

The geographic position can be determined by position-determining means disposed in the vehicle, preferably based on the Loran-C system, which is known per se.

The vehicle data are recorded, for example, on opening and closing of a door or tailboard, on starting and stopping of the engine, and also every three minutes during operation. In this way a reliable and useful collection of vehicle data is built up with a limited quantity of necessary memory space. The vehicle data can also relate to a(n) (electronic) tachograph, an electronic registration number and the like.

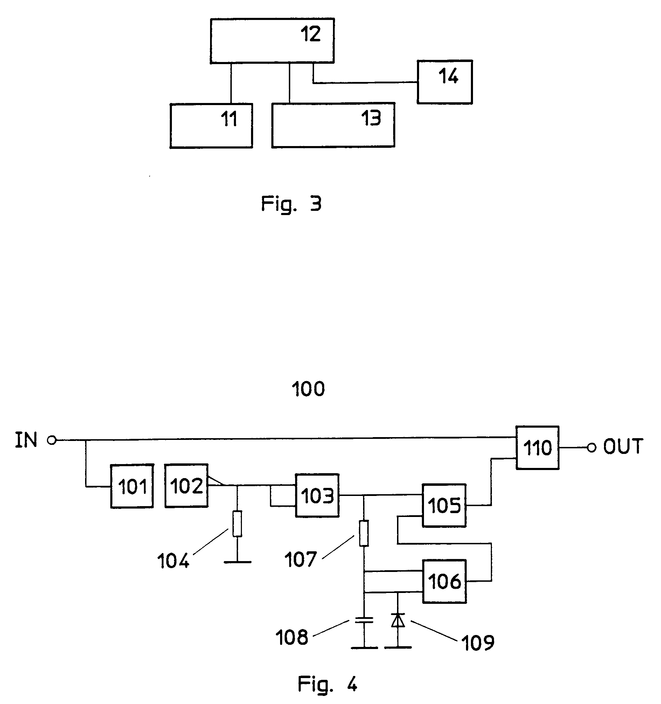

The vehicle units 1, 1' preferably have a programmable processor with associated memory, and can advantageously be provided remotely, i.e. by means of the intermediate unit, with a new program. This makes a flexible adaptation of the vehicle units to changed needs and circumstances possible. The construction of the vehicle units 1, 1' will be explained in greater detail later with reference to Fig. 3.

The intermediate unit 2, which will be explained in greater detail later with reference to Fig. 2, comprises a memory for the storage of, inter alia, vehicle data, and transmission and receiving means for the transfer of said data.

The central unit 3 is advantageously linked to a data processing unit 6, which is capable of graphically presenting journeys covered by the vehicles 4, 4', for example on a screen or plotter. Through a suitable program, symbols can be used here in a graphic display to indicate events (for example a dot at places where the vehicle in question has stopped and a square at places where one or more doors are also opened). Advantageously, the data processing unit is constituted by a computer, such as a PC, with a graphic interface, the vehicles being represented by suitable icons. In this way it can be provided that "clicking" a vehicle icon, i.e. using a mouse to activate an icon representing a vehicle, results in a radio connection being established with the particular vehicle.

In route planning and route evaluation the efficiency of the route covered by the vehicle can be assessed by comparing with the planned route, in which case this planned route can also be stored in the memory of the data processing unit. The data collected in the data processing unit can also be processed into both individual and collective summaries relating to journeys, drivers, vehicles etc. In this way the system according to the invention can be used advantageously for, for example, car leasing companies and transport companies.

Of course, the central unit 3 and the abovementioned data processing unit 6 can be accommodated in a single housing or be integrated to a single unit.

The data transfer between the vehicle units and the intermediate unit or units is effected in the system according to the invention by means of a communications protocol which advantageously meets the following conditions:

a. The protocol is as simple as possible, i.e. it has as little overhead as possible, in order to keep the time required for the transfer of data as short as possible. This is important in particular if the intermediate unit is held in the hand during use. The shorter the transmission time, the less chance there is that movements of the intermediate unit caused by the operator will distort communication.

b. The protocol is independent of the meaning of the data to be transferred, so that the data (instructions for the units, vehicle data) can be varied in number and type without making an adaptation of the protocol necessary.

c. As regards structure, the protocol is suitable not only for data transfer between vehicle units and intermediate unit, but also between intermediate unit and central unit. This makes it possible to design one basic protocol which can then be made suitable with only slight changes for the respective paths.

d. The protocol is not restricted to infrared communication, but can also be used for data transfer by means of high-frequency transponders ("RF tags") or a mobile telephone network (such as the Dutch network "Traxys"). This means that possible variants of the system according to the invention can be achieved with the minimum costs and effort.

In the preferred embodiment of the invention, the protocol meets all four of the abovementioned conditions. It will, however, be clear that these conditions can be achieved independently of each other.

A preferred embodiment of the protocol, as it is used in the system according to the invention, is described below by way of example. In this preferred embodiment, the messages to be transferred with this protocol have a structure as shown in Table 1. The following abbreviations are used:

IU: intermediate unit      VU: vehicle unit
CU: central unit      CHK: checksum (see explanation)

The figures given in the "direction" column relate to the following transfer paths:

1: central unit -> intermediate unit
2: intermediate unit -> central unit
3: vehicle unit -> intermediate unit
4: intermediate unit -> vehicle unit

The figures given in the "message" column are hexadecimal.

Table 1

| Message | Meaning | Direction |
|---|---|---|
| 01 CHK | Start communication | 1,4 |
| 04 CHK | Terminate communication | 1,4 |

| Message | Meaning | Direction |
|---|---|---|
| 06 CHK | Positive acknowledgement | 2,3 |
| 15 | Negative acknowledgement | 1,2,3,4 |
| 18 CHK | Break off communication | 1,2,3,4 |
| 20 [serial number] [time] CHK | Permit communication between IU and VU | 3 |
| 21 [serial number] CHK | Select VU | 1 |
| 30 [serial number] [password] CHK | Initiate VU password | 4 |
| 31 [password] CHK | Send password | 4 |
| 32 [password] CHK | Set password current VU | 1 |
| 33 [password] CHK | Change password VU | 4 |
| 40 CHK | Ask number of data blocks to be read | 1,4 |
| 41 [blocks] CHK | Give number of data blocks to be read | 2,3 |
| 42 CHK | Call for data block | 1,4 |
| 43 [program number] [blocks] CHK | Start transmitting certain program | 1 |
| 44 [blocks] CHK | Start transmitting program | 4 |
| 45 L(message) [data block] CHK | Send data block | 1,2,3,4 |
| 46 CHK | Call for executed commands | 1 |

| Message | Meaning | Direction |
|---|---|---|
| 47 [(serial number) (commands) (time IU)(time VU)1][*] CHK | Give list of executed commands | 2 |
| 50 [time][correction factor] CHK | Send or set clock | 1,2,4 |
| 51 [password] CHK | Set new password current VU | 1 |
| 52 [program number] CHK | Set program current VU | 1 |
| 53 [geographic position] CHK | Set geographic position current VU | 1 |
| 54 [mileage] CHK | Set mileage current VU | 1 |
| 55 [commands] CHK | Set commands current VU | 1 |
| 56 [time] CHK | Set erase time current VU | 1 |
| 57 CHK | Call for clock IU | 1 |
| 60 [time] CHK | Erase memory IU after specified time | 1,4 |
| 61 CHK | Call for amount of free memory in IU | 1 |
| 62 [memory] CHK | Give amount of free memory | 2 |
| 63 CHK | Test memory of IU | 1 |
| 64 CHK | Erase memory of IU | 1 |

The spaces between the elements of the messages in the "messages" column serve only for clarification and are not present in the actual messages. Each message, with the exception of "Negative acknowledgement", comprises a part indicated by "CHK" ("CHecKsum"). This part, in practice one byte, contains the sum (modulo 256) of the values of all transmitted bytes in a message. This makes it possible to check the correct transfer of the message by also calculating the value of "CHK" at the receiving end and comparing this calculated value with the received value. If these two values do not correspond, a "Negative acknowledgement" message is sent back, following which the message in question is re-transmitted (It will be clear that no checksum is needed in the case of the "Negative acknowledgement" message itself, since an incorrect checksum has already been established.). This retransmission can be repeated up to five times. If the communication is still not successful then, the communication is broken off. Although the protocol can in principle operate without checksum, an effective protection of the transfer against errors is achieved in this way.

A further protection against errors is achieved by checking the time intervals between transmitted characters of a message and between a message and the answer to it. In both cases the communication can be broken off if the time interval concerned is greater than 5 seconds. Moreover, when there is an interruption it is not necessary to re-transmit any data blocks already transmitted, since the number of transmitted data blocks is recorded by, for example, a counter. When the communication is resumed, it is thus possible to continue with the data block which follows the last fully transmitted data block.

As is shown in Table 1, each message consists of a message code which identifies the message, and a checksum, with in many cases the data to be transmitted between them. Certain vehicle data are transferred in data blocks. The message "List of executed commands" (message code 47) (as a reply to the message "Ask for executed commands", message code 41) is always sent three times, always for the data of ten vehicle units, assuming that the system comprises thirty vehicle units. For the sake of clarity, only the data of a first vehicle unit are given in Table 1; the data of the other vehicle units are indicated symbolically by "[*]".

The message "Send data block" (message code 45) contains a part "L(message)", i.e. the length of the message, which can be variable. The part "L(message)" has itself preferably a constant length of one byte. The term "program" relates to a set of instructions, for example for controlling a vehicle unit, which can be loaded in a vehicle unit. The correction factor for time is used to calculate, for example, summer time and/or differences from a specified reference time, such as Greenwich Mean Time.

The messages given in Table 1 are transferred asynchronously by suitable transmitting and receiving means, which are known per se, by the RS232 protocol method, for example at a baud rate of 19,200. The above-described preferred embodiment of the protocol is semi-duplex, which means that bidirectional communication is possible, the different directions being used sequentially. Not permitting simultaneous bidirectional communication ensures that the protocol can be kept simple and efficient, while the chance of transmission errors through mutual interference of the two communication directions is virtually eliminated.

The possible exchange of messages between the various units of the system according to the invention is given below with reference to two examples. In this case the abbreviation "C" is used for "Call" and the abbreviation "A" for "Answer". In the first example the messages to be exchanged (cf Table 1) are given in brackets, by way of illustration.

Example I. Communication between the intermediate unit and the vehicle unit:

- Step 1 (start communication):
C. The intermediate unit requests communication with the vehicle unit (01 CHK).
A. The vehicle unit answers with its serial number and the time of readout (20 [serial number] [time] CHK). These data are stored in the intermediate unit, together with the time of read-out determined by the intermediate unit itself.
- Step 2 (retrieve data):
C. The intermediate unit calls for the number of data blocks to be read out, each max. 252 bytes (40 CHK).
A. The vehicle unit gives the number (41 [blocks] CHK).
C. The intermediate unit calls for the data blocks one by one (42 CHK).
A. The vehicle unit transfers a data block at a time (45 L(message) [data block] CHK). In the first data block the vehicle unit puts the serial number of the vehicle unit and the total length of the data block.
- Step 3 (initiate password):
C. The intermediate unit sends the serial number and the new initial password (30 [serial number] [password] CHK).
A. The vehicle unit accepts the password (06 CHK).
- Step 4 (identify with password):
C. The intermediate unit seeks the correct password corresponding with the serial number of the vehicle unit and sends it to the vehicle unit (31 [password] CHK). If the serial number is not known at the vehicle unit, the communication is broken off.
A. The vehicle unit accepts the password (06 CHK). If the password is not correct, the communication is broken off.

- Step 5 (erase the memory of the vehicle unit):
C.     The intermediate unit issues the command to erase the data memory of the vehicle unit at a particular time (60 [time] CHK).
A.     The vehicle unit acknowledges receipt (06 CHK).
- Step 6 (change password):
C.     The intermediate unit issues the command to change the password to the specified password (33 [password] CHK).
A.     The vehicle unit acknowledges receipt (06 CHK).
- Step 7 (set time of vehicle unit):
C.     The intermediate unit issues the command to change the time to the specified time (50 [time] [correction factor] CHK).
A.     The vehicle unit acknowledges receipt (06 CHK).
- Step 8 (transfer data blocks):
C.     The intermediate unit issues the command to store the following N data blocks as data (program) (43 [program number] [blocks] CHK).
A.     The vehicle unit acknowledges receipt (06 CHK).
C.     The intermediate unit sends one by one the N data blocks (45 L(message) [data block] CHK).
A.     The vehicle unit acknowledges receipt (06 CHK) of each block.
- Step 9 (set geographic position):
C.     The intermediate unit sends the geographic position to the vehicle unit (53 [geographic position] CHK).
A.     The vehicle unit acknowledges receipt (06 CHK).
- Step 10 (set mileage):
C.     The intermediate unit sends the mileage to the vehicle unit (54 [mileage] CHK).
A.     The vehicle unit acknowledges receipt (06 CHK).
- Step 11 (terminate communication):
C.     The intermediate unit terminates the communication (04 CHK).
A.     The vehicle unit acknowledges this (06 CHK).

Steps 5 to 10 inclusive can be carried out only if there has been a password identification in step 4. The read-out from the vehicle unit is thus always possible, but the remaining actions can be carried out only if the intermediate unit has the serial number and the correct password of the vehicle unit.


Example II. Communication between the intermediate unit and the central unit:


- Step 1 (start communication):
C.     The central unit requests communication with the intermediate unit.
A.     The intermediate unit allows communication.
- Step 2 (retrieve data):
C.     The central unit calls for the number of data blocks to be read out, each max. 252 bytes.
A.     The vehicle unit gives the number.
C.     The central unit calls for the data blocks one by one.
A.     The intermediate unit transfers one data block at a time.
- Step 3 (read-out of executed actions, in three stages):
C.     The central unit asks the intermediate unit for the results of the executed commands.
A.     The intermediate unit gives the first part of the commands.
C.     The central unit asks the intermediate unit for the results of the executed commands.
A.     The intermediate unit gives the second part of the commands.
C.     The central unit asks the intermediate unit for the results of the executed commands.
A.     The intermediate unit gives the third part of the commands.
- Step 4 (retrieve free memory):
C.     The central unit asks the intermediate unit how much free memory it has.
A.     The intermediate unit gives the number of bytes.
- Step 5 (test the memory of the intermediate unit):
C.     The central unit gives the intermediate unit the command to test the total memory.
A.     The intermediate unit acknowledges receipt of the command, and the communication is terminated.
- Step 6a (set time of intermediate unit):
C.     The central unit issues the command to change the time to the specified time.

A. The intermediate unit acknowledges receipt.
- Step 6b (retrieve time of intermediate unit):
C. The central unit calls for the clock of the intermediate unit.
A. The intermediate unit answers with its time.
- Step 7 (send program):
C. The central unit issues the command to receive N blocks of data of a particular program.
A. The intermediate unit acknowledges receipt.
C. The central unit sends the N data blocks one by one.
A. The intermediate unit acknowledges receipt of each block.
- Step 8 (selection of an intermediate unit):
C. The central unit indicates by means of a serial number which vehicle unit the following commands are intended.
A. The intermediate unit acknowledges receipt.
- Step 9 (set password):
C. The central unit gives the intermediate unit the password for the selected vehicle unit.
A. The vehicle unit acknowledges receipt.
- Step 10 (set commands to vehicle unit):
C. The central unit sends the intermediate unit the list of commands which must be executed by the selected vehicle unit for the read-out. Depending on the commands, the new password, the erase time and the program number are also given by means of separate messages.
A. The intermediate unit acknowledges receipt of each message.
- Step 11 (terminate communication):
C. The central unit terminates the communication.
A. The vehicle unit acknowledges this.

The password protection of the abovementioned protocol means that data can be erased only by an authorized person. This ensures that it is not possible to tamper with data in the vehicle units. Delaying the erasing of data in the vehicle units provides further protection against both tampering and data loss through operating errors. A further means of checking is provided by incorporating a date and time stamp of each registration (such as a position registration) in the vehicle data.

The intermediate unit 2 shown schematically in Fig. 2 comprises a control unit 21, a memory 22, a user interface 23, a first communication part 24 for communication with the vehicle units, a second communication part 25 for communication with the central unit, and a power supply part 26. The control unit 21 is preferably a microcontroller, the memory 22 a static RAM, and the user interface 23 a keyboard, a display unit (for example an LCD display), a buzzer, and a two-colour LED for indicating control functions. The communication part 24 preferably comprises an infrared transmitter and receiver, while the communication part 25 in the preferred embodiment comprises a connector and a suitable buffer circuit for communication by means of a cable to be connected. The power supply part 26 preferably comprises an accumulator cell 261 (or a bank of accumulator cells), an ON/OFF circuit 262, an power-saving circuit 263 for reducing the energy consumption when the intermediate unit is not being actively used, and a circuit 264 for monitoring the power supply, which circuit gives an error indication by means of, for example, an LED if the supply voltage has fallen below a threshold value. The accumulator cell 261 is connected to a suitable connector (not shown) for connection to a(n) (external) charging unit (265). The intermediate unit 2 can be composed of commercially available components and circuits.

It will be clear that the power of the infrared transmitter used in the intermediate unit, in conjunction with the sensitivity of the infrared receivers used in the vehicle units, must be sufficient to permit data transfer through glass, preferably over a distance of at least one metre, but preferably at least two metres. The same applies mutatis mutandis to the infrared receiver of the intermediate unit in conjunction with the infrared transmitters of the vehicle units. An intermediate unit, like a vehicle unit, is advantageously provided with means for protecting against receiving data transmitted by that particular unit itself. A circuit providing such protection will be discussed later with reference to Fig. 4.

Due to the fact that data from several vehicles and/or instructions for several vehicle units can be stored in the intermediate unit, an intermediate unit in the preferred embodiment of the invention forms, as it were, a portable database. If the vehicle units do not have operating units themselves, an intermediate unit also forms a "key" which is used to operate, reprogram and read out from the vehicle units.

In the embodiment shown, the intermediate unit 2 can be connected to the central unit by means of a cable. By means of such a cable, it is possible both to transfer energy to the intermediate unit and to exchange data between the intermediate unit and the central unit. Since the data from a large number of vehicles (for example, thirty) can be transferred by the intermediate unit, connecting a cable once for such data transfer is no problem in practice. However, it is possible to design the intermediate unit and the central unit in such a way that the data transfer between these units is also wireless, for example also by means of infrared light.

When an intermediate unit is not in use, it is preferably placed in a wall container (not shown). Such a wall container can advantageously be provided with electrical contacts for charging an accumulator cell present in the intermediate unit.

The vehicle unit 1 shown schematically in Fig. 3 comprises a memory 11, a processor 12, a transmitting/receiving part 13, and a connector 14, which can all consist of commercially available components. Both data collected in the vehicle (for example, speed, position etc.) and instructions for the vehicle unit itself (program for the processor, operating instructions) are stored in the memory 11. The processor 12 serves to control the vehicle unit and to process vehicle data (at least temporarily). The vehicle unit is connected during operation by means of connector 14 to a board computer (not shown). The vehicle unit 1 can either be integral with a board computer present in the vehicle or can be a separate unit set up away from such a board computer.

In a preferred embodiment, the circuit of Fig. 4 is incorporated in the infrared transmitting/receiving part of both the vehicle unit 1 and the intermediate unit 2, for the purpose of avoiding interfering influences of the infrared signal transmitted on the infrared signal received. In the intermediate unit 2 this circuit can be accommodated in the communication part 24 (see Fig. 2), while in the vehicle unit 1 it can be in the transmitting/receiving part 13 (see Fig. 3). The circuit 100 comprises an infrared transmitter 101 and an infrared receiver 102. The output of the infrared receiver 102 is connected to both inputs of a first OR gate 103, which inputs are also connected to earth by means of a resistor 104. The output of the OR gate 103 is connected to a first input of a second OR gate 105 and by means of a resistor 107 to both inputs of a third OR gate 106. The inputs of the third OR gate 106 are connected to each other and by means of a capacitor 108 and a diode 109 to earth. The output of the third OR gate 106 is connected to a second input of the second OR gate 105. The input IN of the circuit 100 is connected to the input of the infrared transmitter and to a first input of a fourth OR gate 110. The output of the second OR gate 105 is connected to a second input of the fourth OR gate 110. The output of the fourth OR gate 110 forms the output OUT of the circuit 100. The components of the circuit can be commercially available components. For example, the infrared transmitter 101 can be a Sharp RYSAT01, and the infrared receiver 102 can be a Sharp RY5AR01.

If the infrared receiver 102 begins to receive a light pulse, its output will emit a changed signal value. Since the output is inverted, as indicated by the oblique line, the signal value at the output will fall from the signal level "high" ("1") to the signal level "low" ("0"). This fall of the signal value (falling edge) is buffered by the first OR gate 103, so that a falling signal value (falling edge) also arises at the output of the OR gate 103. The sole purpose of the resistor 104 is to provide the output of the infrared receiver 102 with current in the event of said output being an open collector output, as in the exemplary embodiment shown. The resistor 104 therefore has no influence on the signal value. The falling edge then reaches the first input of the OR gate 105 and, by means of the resistor 107, the inputs of the OR gate 106. The diode 109 has no essential influence on the behaviour of the circuit, and its only purpose is to provide protection against overvoltage on the inputs of the OR gate 106. If an OR gate with inbuilt protection is used, the diode 109 can be omitted.

Due to the presence of the capacitor 108, the signal value on the inputs of the OR gate 106 will fall with some delay. The output of the OR gate 106 will therefore not reach the signal level "low" until after some time. As a result of this, the signal value at the second input of the OR gate 105 will fall later (and thus assume the signal level "low" later) than the signal value at the first input of that gate. Since the output of an OR gate assumes the value "low" (or "0") only if the value "low" is present at both inputs, the falling signal value, and thus the response to the light pulse received, will reach the OR gate 110 with some delay, the size of the delay being determined by the combination of resistor 107 and capacitor 108.

Due to the presence of the OR gate 110, the output OUT of the circuit 100 can change value under the influence of the infrared receiver 102 only if the input signal of the circuit 100 is "low" ("0"). If the input signal is low at "IN", i.e. if there is no transmitting signal, the signal at the output OUT constitutes the inverted receiving signal (as stated above, this inversion comes about through the inverting output of the receiver 102). In other words, during the transmission of a light pulse (signal value at input IN is "high") a light pulse received cannot give rise to a changed output signal at the output OUT. After receiving a light pulse, the circuit 100 causes a certain delay in the signal received, as explained in the above, the delay time - determined by the values of the resistor 107 and the capacitor 108 - being selected at least equal to the pulse duration of the transmitted infrared pulses. This means that the output signal, i.e. the inverted receiving signal, at the output OUT is effectively suppressed during the transmission and reception of a pulse from its own transmitter. This ensures that at its output OUT the circuit 100 does not emit pulses generated by its own transmitter.

It will be clear that the use of the circuit of Fig. 4 is not limited to the above system for the transfer of vehicle data, but also comprises other forms of infrared communication, such as infrared remote operating systems with answerback signal. Moreover, the person skilled in the art will understand that the circuit 100 can also be achieved in other ways. Therefore, if no inverting receiver is used, the inversion of the receiving signal can also be obtained by, for example, a separate inverter.

As described in the above, the invention provides a system for the transfer of vehicle data in which wireless communication is possible remotely between the vehicle units and at least one intermediate unit. This wireless communication is preferably achieved by means of infrared light, in the case of which communication can be made through the window of a vehicle, so that data can also be transferred from and to a closed vehicle. Data from several vehicles can be stored or collected in the at least one, preferably portable intermediate unit.

It will be understood that the invention is not limited to the exemplary embodiments described above, and that many variations and additions are possible without departing from the spirit and scope of the present invention.

## Claims

1. System for the transfer of data relating to vehicles (4,4'), comprising vehicle units (1, 1') disposed in vehicles (4,4'), a central unit (3), and at least one intermediate unit (2), which intermediate unit (2) is equipped for at least temporarily storing data, the system being equipped for the transfer of data between the vehicle units (1,1') and the intermediate unit (2), on the one hand, and between the central unit (3) and the intermediate unit (2), on the other hand, and the system further being equipped for the transfer of data by means of infrared light between the vehicle units (1,1') and the intermediate unit (2), characterized in that the system is equipped for the remote bidirectional transfer of data between the vehicle units (1,1') and the at least one intermediate unit (2), the intermediate unit (2) being equipped for the storage of data from several vehicles (4,4').

2. System according to claim 1, the system being equipped for the remote bidirectional transfer of data between the central unit (3) and the at least one intermediate unit (2).

3. System according to claim 1 or 2, in which a vehicle unit (1) is situated inside a vehicle (4) behind a window of said vehicle, which window is preferably the windscreen (5).

4. System according to any of the preceding claims, in which the vehicle units (1,1') are arranged to prevent the manual input of data.

5. System according to any of the preceding claims, in which the transfer of data between a vehicle unit (1) and an intermediate unit (2) is possible only if said transfer includes a password which is unique for the particular vehicle unit (1).

6. System according to claim 5, in which the vehicle units (1, 1') are arranged for replacing the password by a new password, the vehicle data stored in the vehicle unit being erased if the new password is transferred without the existing password.

7. System according to any of the preceding claims, equipped for data transfer in data blocks and for recording the number of data blocks transmitted, in order to ensure that after an interruption in the data transfer retransmission of data blocks already transmitted does not occur.

8. System according to any of the preceding claims, in which the vehicle units (1, 1') are equipped for the storage of data relating to the opening of the doors and tailboard, the running of the engine, the mileage, the speed and the level in the fuel tank of the respective vehicle (4; 4').

9. System according to any of the preceding claims, in which the vehicle units (1, 1') are equipped for the storage of data relating to the current geographic position of the respective vehicle (4; 4'), the central unit (3) preferably being linked to a data processing unit (6) which is capable of graphically presenting, inter alia, the journeys covered by the vehicles (4, 4').

10. Intermediate unit (2) for use in a system according to any of the preceding claims, comprising a control unit (21), a memory (22) for the storage of vehicle data, a user interface (23) comprising a keyboard for entering instructions, and means (24, 25) for the remote transfer of vehicle information, said means (24, 25) comprising a transmitter for the transfer of the vehicle data to a vehicle unit (1) and/or to a central unit (3) and a receiver for receiving data.

11. Vehicle unit (1) for use in a system according to any of Claims 1 through 9, comprising a programmable processor (12), a memory (11), and communications means (13) comprising an infrared transmitter and an infrared receiver.

12. Transmitting and receiving circuit (100) for use in a system according to any of claims 1 through 9, comprising a transmitter (101), a receiver (102), a time-delay circuit (105, 106, 107, 108) for delaying the receiving signal, and a combination circuit (110) for combining the transmitting signal and the receiving signal in such a way that the receiving signal is suppressed during the transmission and for a short time thereafter.

Fig. 1

Fig. 2

Fig. 3

100

Fig. 4

European Patent
Office

**EUROPEAN SEARCH REPORT**

Application Number

EP 94 20 2098

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | FR-A-2 667 554 (PARIENTI,R.)<br><br>* page 1, line 12 - line 16 *<br>* page 2, line 7 - line 9 *<br>* page 3, line 4 - line 6 *<br>* page 3, line 29 - line 31 *<br>* claim 1 *<br>--- | 1-4,10, 11 | G06K19/00<br>G07C5/00<br>G08G1/127<br>G06F17/60<br>G06K17/00 |
| D,A | GB-A-2 192 665 (NEIMAN SECURITY PRODUCTS LTD)<br>* page 1, line 62 - line 71 *<br>* page 2, line 70 - line 73 *<br>--- | 1,4,8, 10,11 | |
| D,A | FR-A-2 647 930 (COMPAGNIE GENERALE D'AUTOMATISME CGA-HBS)<br>* page 8, line 21 - line 25 *<br>--- | 1 | |
| A | US-A-4 398 172 (CARROLL,R.J. ET AL)<br>* claim 7 *<br>--- | 1,11,12 | |
| A | GB-A-2 169 173 (E M X INTERNATIONAL LTD)<br>* the whole document *<br>--- | 1,4,8-10 | **TECHNICAL FIELDS SEARCHED** (Int.Cl.6)<br><br>G06K<br>G07C |
| A | EP-A-0 383 593 (HITACHI LTD)<br>* claim 14 *<br>--- | 1,4,9 | |
| A | WO-A-90 12365 (AUTO I.D. INC.)<br>* claim 13 *<br>--- | 7,8 | |
| A | US-A-4 897 642 (DILULLO,J.V. ET AL)<br>* column 2, line 30 - line 33 *<br>* claim 32 *<br>----- | 9 | |

The present search report has been drawn up for all claims

| Place of search | Date of completion of the search | Examiner |
|---|---|---|
| THE HAGUE | 2 November 1994 | Herskovic, M |

EPO FORM 1503 03.82 (P04C01)